# EUROPÄISCHE PATENTSCHRIFT

(11) **EP 3 933 284 B1**
(45) Veröffentlichungstag und Bekanntmachung des Hinweises auf die Patenterteilung: **02.04.2025**
(21) Anmeldenummer: 21179940.8
(22) Anmeldetag: 17.06.2021
(51) Int. Cl.: F24D 19/00

(54) **HEIZ- ODER KÜHLKÖRPER, INSBESONDERE MEHRREIHIGER FLACHHEIZKÖRPER ODER HEIZWAND IN VERTIKALER ODER HORIZONTALER ANORDNUNG, MIT MINDESTENS EINER LÜFTERBAUGRUPPE**
HEATING OR COOLING BODY, IN PARTICULAR MULTI-ROW FLAT RADIATOR OR HEATING WALL IN VERTICAL OR HORIZONTAL ARRANGEMENT, WITH AT LEAST ONE FAN ASSEMBLY
RADIATEUR OU REFROIDISSEUR, EN PARTICULIER RADIATEUR PLAT OU PAROI CHAUFFANTE À RANGÉS MULTIPLES À AGENCEMENT VERTICAL OU HORIZONTAL, DOTÉ D'AU MOINS UN MODULE D'AÉRATEUR

(30) Priorität: 01.07.2020 DE 102020208201
(43) Veröffentlichungstag der Anmeldung: 05.01.2022
(73) Patentinhaber: Kermi GmbH, 94447 Plattling (DE)
(72) Erfinder: Obermaier, Florian, 94554 Moos (DE); Wyrobek, Michael, 94447 Plattling (DE)
(74) Vertreter: Patentanwälte Bressel und Partner mbB

(56) Entgegenhaltungen:
- EP-A1- 3 800 414
- EP-A2- 2 515 046
- DE-U1- 202008 005 915
- DE-U1- 202009 002 307
- DE-U1- 202009 002 307
- GB-A- 2 235 039
- GB-A- 2 577 707

## Beschreibung

Die Erfindung betrifft einen Heiz- oder Kühlkörper, insbesondere mehrreihiger Flachheizkörper oder eine Heizwand in vertikaler oder horizontaler Anordnung mit mindestens einem Halteelement für mindestens eine Lüfterbaugruppe nach dem Oberbegriff des Anspruchs 1.

Heizkörper mit freier Konvektion sind vor allem bei niedrigen Vorlauftemperaturen, die derzeit durch die Nutzung regenerativer Energien eine zunehmende Marktbedeutung erfahren, durch einen rapiden Abfall der Heizleistung gekennzeichnet. Um dem zu begegnen ist es bereits bekannt, Heizkörper mit zuschaltbaren Lüftern auszustatten. Dabei werden die Lüfter je nach Bauart unter- oder oberhalb der Heizflächen angeordnet. Derartige Heizkörper sind aus dem Stand der Technik hinlänglich bekannt und werden beispielsweise in den Druckschriften DE 29 45 083, DE 29 35 735 A1, DE 198 34 269 C2, DE 198 34 270 C2, DE-OS 24 03 127, DE 82 25 121 U1 und DE 20 2009 002 307 U1 beschrieben. Gehalten werden die Lüfter oder Lüfterbaugruppen an den Heizplatten durch Bänder, Schnüre oder Fäden (DE 10 20100 109 168 B3). Durch den Luftzug kann das dabei zu unerwünschten Geräuschen kommen. Bekannt sind auch Lösungen mit Lüfterbaugruppen in Heizkörperabdeckungen (DE 20 2009 002 307 U1) oder in eingeschweißten Blechen (EP 2 218 974 A2, WO 2009/133543 A1). Eine nachträgliche Ausrüstung ist damit nicht möglich.

In der Druckschrift GB 2 577 707 A wird eine Montageanordnung für eine Lüftereinheit mit in einer länglichen Anordnung integrierten Ventilatoren beschrieben, die abnehmbar an einem Heizkörper, wie z.B. einem Heizkörper mit zwei Heizplatten angeordnet sind. Die langgestreckte Anordnung weist Magneten auf, die es ermöglichen, die Anordnung am Heizkörper zu befestigen und zwar direkt darunter oder zwischen den beiden Platten des des Heizkörpers.

Die DE 20 2008 005 915 U1 betrifft ein Erweiterungsmodul für passive Heizkörper, welches aus einem System mit Schienen, Lüftern und einer Regelungseinheit aufgebaut ist und der Konvektionserhöhung, insbesondere an Heizkörpern, dienen soll. Mit dem Modul sind passive Heizkörper durch die nachträgliche Erweiterung zu aktiven Heizkörpern umgestaltbar. An den Schienen sind Dauermagnete als Mittel zur Halterung des Erweiterungsmoduls am passiven Heizkörper vorgesehen, wodurch das Erweiterungsmodul nachträglich an bereits installierte passive Heizkörper reversibel anbringbar ist.

Die Aufgabe der vorliegenden Erfindung besteht darin, einen Heizkörper mit einer Halterung für die Lüfterbaugruppe vorzustellen, mit welcher die Nachteile der aus den o.g. Druckschriften bekannten Halterungen für Lüfterbaugruppen weitgehend überwunden werden können. Erfindungsgemäß wird diese Aufgabe durch die Merkmale des Anspruchs 1 gelöst. Vorteilhafte Weiterbildungen der Erfindung sind in den zugehörigen Ansprüchen enthalten. Demnach umfasst die Erfindung einen Heiz- oder Kühlkörper, insbesondere einen mehrreihigen Flachheizkörper oder eine Heizwand in vertikaler oder horizontaler Anordnung, der aus mindestens zwei Heizplatten mit eingeprägten oberen und unteren horizontalen Sammelkanälen und vertikalen Heizkanälen sowie einem Vor -und Rücklaufanschluss zum Anschluss an das Netz eines Heizungssystems besteht, welches den Heiz- oder Kühlkörper mit einem Heiz-oder Kühlmedium versorgt. Zwischen den Heizplatten an jedem oberen seitlichen Endabschnitt und/oder an jedem unteren seitlichen Endabschnitt sind Anschlussgarnituren angeordnet, sowie mindestens ein Ventilator einer Lüfterbaugruppe, die mittels Halteelementen zwischen zwei Heizplatten des Heiz-oder Kühlkörpers angeordnet ist. Erfindungsgemäß ist nunmehr vorgesehen, dass die Halteelemente eine Verbindungsplatte umfassen, die zwischen zwei Heizplatten einsetzbar ist, wobei die Verbindungsplatte an den den beiden Heizplatten des Heiz- oder Kühlkörpers zugerichteten Enden der Verbindungsplatte nach oben und unten weisende Haltestege aufweisen, die mit den sich gegenüberliegenden beiden Heizplatten in einem Wirkungszusammenhang stehen, wobei in der Verbindungsplatte außerdem Mittel zur Fixierung des mindestens einen Ventilators der Lüfterbaugruppe vorgesehen sind. Die Mittel zur Fixierung der Ventilatoren in der Lüfterbaugruppe sind kraft-, form- oder stoffschlüssig ausgebildet. Vorzugsweise ist vorgesehen, dass die Ventilatoren der Lüfterbaugruppe mit der Verbindungsplatte der Halteelemente mittels Schraubverbindungen fixiert werden, wobei dafür in der Verbindungsplatte Aufnahmeöffnungen vorgesehen sind. Vorteilhaft ist vorgesehen, dass die Haltestege klammernd an den eingeprägten oberen und/oder unteren horizontalen Sammelkanälen der sich gegenüberliegenden Heizplatten eingreifen. Besonders vorteilhaft ist vorgesehen, dass die Haltelemente mit der Lüfterbaugruppe zwischen den oberen oder unteren eingeprägten horizontalen Sammelkanälen der beiden sich gegenüberliegenden Heizplatten einsetzbar sind. Nach einer weiteren Ausführung der Erfindung ist vorgesehen, dass die Verbindungsplatte der Haltelemente eine Nut zur Aufnahme eines Temperaturfühlers aufweist. Vorteilhaft kann dabei weiter vorgesehen werden, dass wenigstens einer der Haltestege der Haltelemente eine Nut zur Aufnahme eines Temperaturfühlers aufweist. Durch einfachste Mittel können dadurch am Heizkörper mehrere zusätzliche Funktionen realisiert werden.

Nachstehend wird die Erfindung anhand eines Ausführungsbeispiels näher beschrieben.

In den Zeichnungen zeigen:
- Fig. 1: eine Detailansicht eines Heizkörpers,
- Fig. 2: ein Halteelement,
- Fig. 3: ein alternatives Halteelement,
- Fig. 4: ein Ventilator zwischen zwei Halteelementen,
- Fig. 5: ausschnittsweise Schnittdarstellung durch einen Heizkörper mit montierter Lüfterbaugruppe,
- Fig. 6: Explosionsdarstellung Heizkörper, Halteelemente, Lüfterbaugruppe,
- Fig. 7: Haltelement mit Aufnahme für einen Temperaturfühler,
- Fig. 8: Haltelement mit Aufnahme für einen Temperaturfühler und mit Temperaturfühler,
- Fig. 9: Haltelement mit einer alternativen Aufnahme für einen Temperaturfühler in einer Teilansicht des Heizkörpers,
- Fig. 10: Heizkörper ausschnittsweise mit Halteelement und Temperaturfühler.

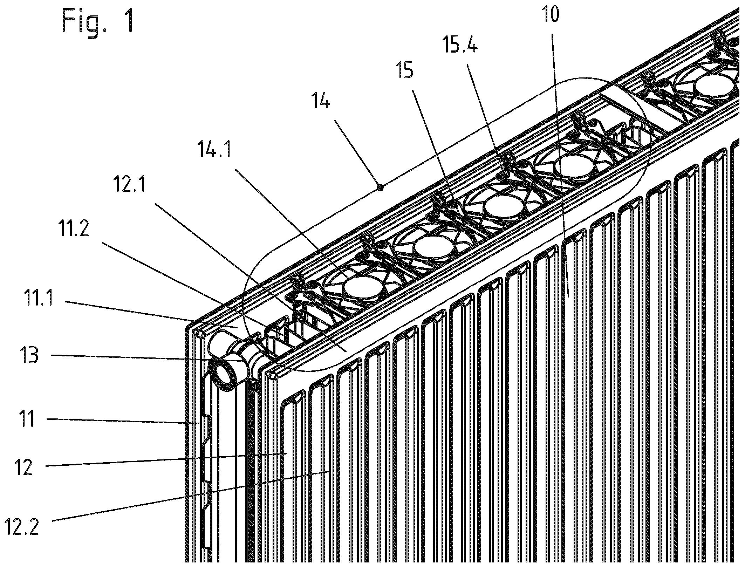

In der Fig. 1 ist eine Variante (Einbauposition der Lüftergruppe oben) des erfindungsgemäßen Heizkörpers 10 in einer Detailansicht ausschnittsweise dargestellt.

Die Lüfter 14.1 können unten mit der gleichen Halterung ebenso eingebaut werden.

Bei den Lüftern 14.1 handelt es im Allgemeinen um Standardlüfter, welche auch in handelsüblichen PC's verbaut werden, jedoch in Industriequalität.

Im Beispiel ist ein Heizkörper 10, nämlich ein zweireihiger Flachheizkörper in horizontaler Anordnung dargestellt, der aus zwei Heizplatten 11, 12 mit eingeprägten oberen und unteren horizontalen Sammelkanälen 11.1, 12.1 und vertikalen Heizkanälen 11.2, 12.2 besteht. Der Vor -und Rücklaufanschluss zum Anschluss an das Netz eines Heizungssystems, welches den Heizkörper mit einem Heiz- oder Kühlmedium versorgt, sind nicht dargestellt. Zwischen den beiden Heizplatten 11, 12 an jedem oberen seitlichen Endabschnitt und/oder an jedem unteren seitlichen Endabschnitt sind Anschlussgarnituren 13 (nur teilweise dargestellt) angeordnet, sowie eine Lüfterbaugruppe 14, die mit mittels Halteelementen 15 zwischen den beiden Heizplatten 11, 12 des Heizkörpers 10 angeordnet ist.

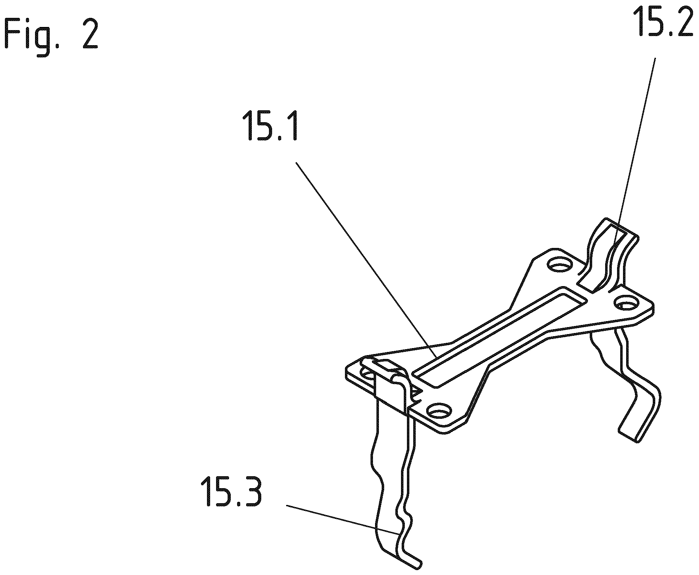

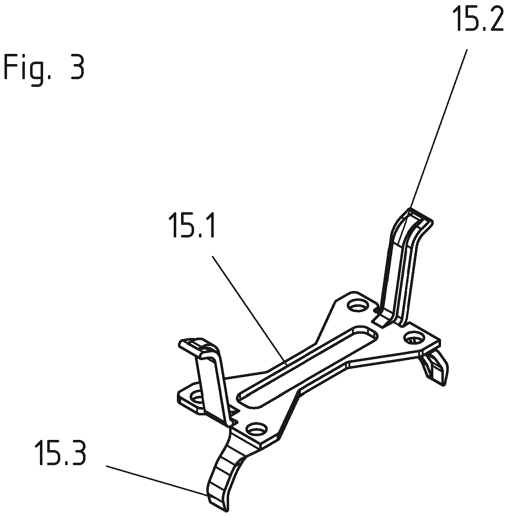

Die in den Fig. 2 und 3 dargestellten Halteelemente 15 umfassen eine Verbindungsplatte 15.1, die zwischen den zwei Heizplatten 11, 12 einsetzbar ist, wobei die Verbindungsplatte 15.1 an den den beiden Heizplatten des Heizkörpers zugerichteten Enden der Verbindungsplatte nach oben und unten weisende Haltestege 15.2,15.3 aufweist, die mit den sich gegenüberliegenden beiden Heizplatten 11, 12 in einem Wirkungszusammenhang stehen, d.h. die Haltestege 15.2,15.3 greifen klammernd unter bzw. über die unteren bzw. oberen Sammelkanäle 11.1, 12.1 und verspannen sich dabei gegen die beiden Heizplatten 11, 12.

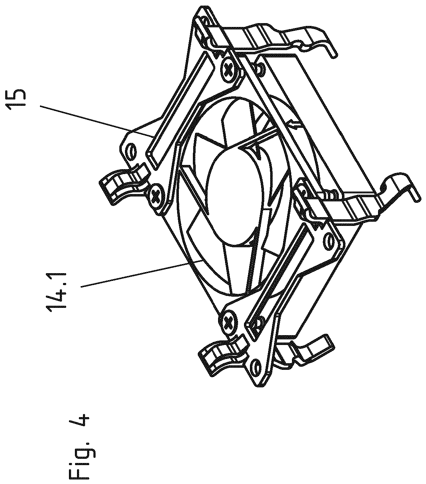

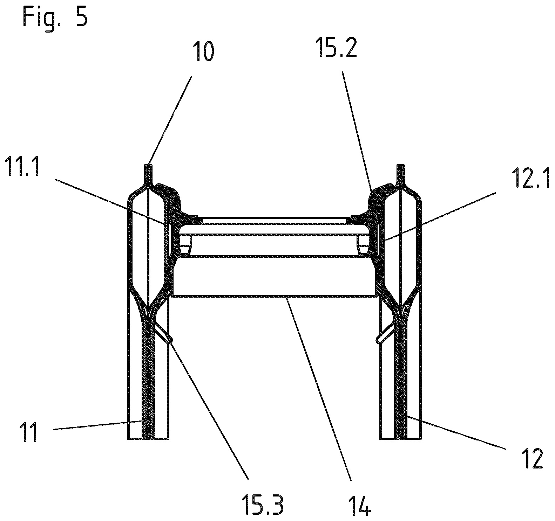

Die Verbindungsplatte 15.1 weist außerdem Mittel zur Fixierung der Ventilatoren 14.1 der Lüfterbaugruppe 14 auf. Vorzugsweise sind die Ventilatoren der Lüfterbaugruppe mit der Verbindungsplatte 15.1 der Halteelemente 15 mittels Schraubverbindungen 15.4 fixiert. Dafür sind in der Verbindungsplatte 15.1 Aufnahmeöffnungen vorgesehen. Die Haltelemente 15 mit der Lüfterbaugruppe 14 können zwischen den oberen (Fig. 2) oder unteren (Fig. 3) eingeprägten horizontalen Sammelkanälen der beiden sich gegenüberliegenden Heizplatten eingesetzt werden. Die Verbindungsplatten sorgen für Stabilität beim Verbund Lüftergruppe und Heizkörper sowie bei der Montage der Lüfterbaugruppe am Heizkörper. Die oberen und unteren Haltestege dienen der Befestigung und verhindern ein Durchrutschen der Lüfterbaugruppe in den Heizkörper. In der Fig. 4 wird ein zwischen zwei Halteelementen 15 eingesetzter Ventilator 14.1 gezeigt. An die Halteelemente 15 können weitere Ventilatoren 14.1 montiert werden. In der Fig. 5 wird ausschnittsweise ein Heizkörper 10 mit montierter Lüfterbaugruppe 14 in Schnittdarstellung gezeigt. Die Haltestege 15.2, 15.3 umgreifen klammernd die oberen Sammelkanäle 11.1, 12.1 der beiden Heizplatten 11, 12 und dienen somit der Halterung der Lüfterbaugruppe 14.

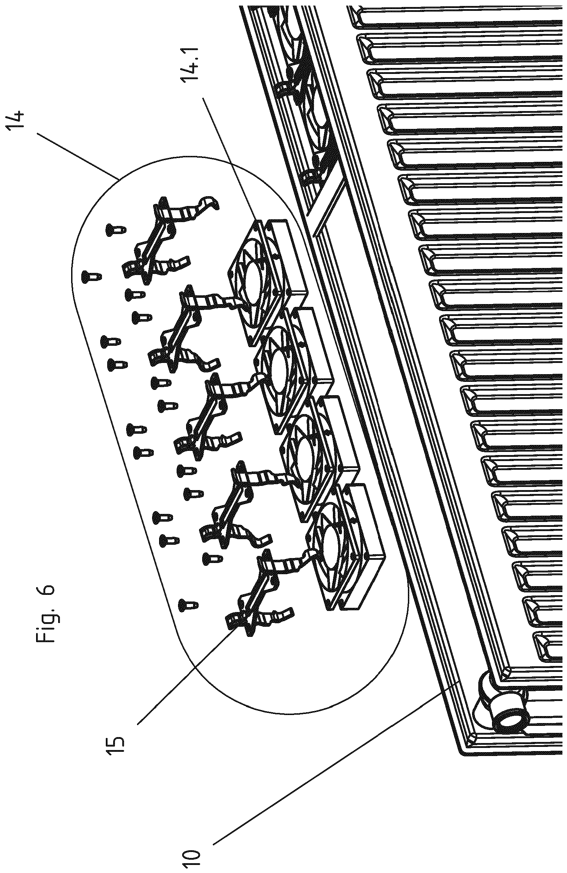

Die Fig. 6 zeigt in einer Explosionsdarstellung den Heizkörper 10 (ausschnittsweise), die Halteelemente 15 und die Ventilatoren 14.1 der Lüfterbaugruppe 14.

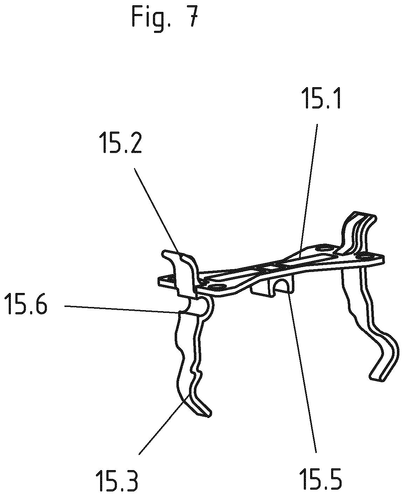

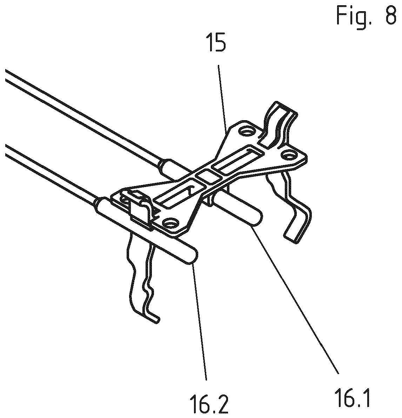

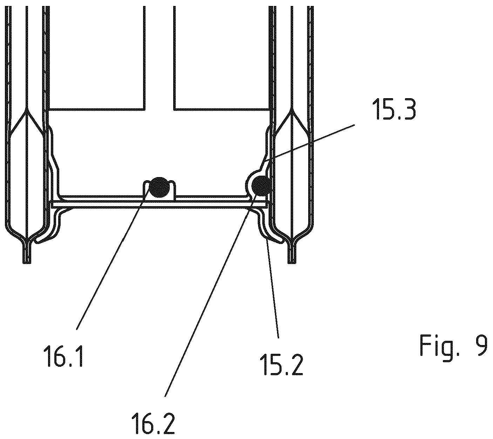

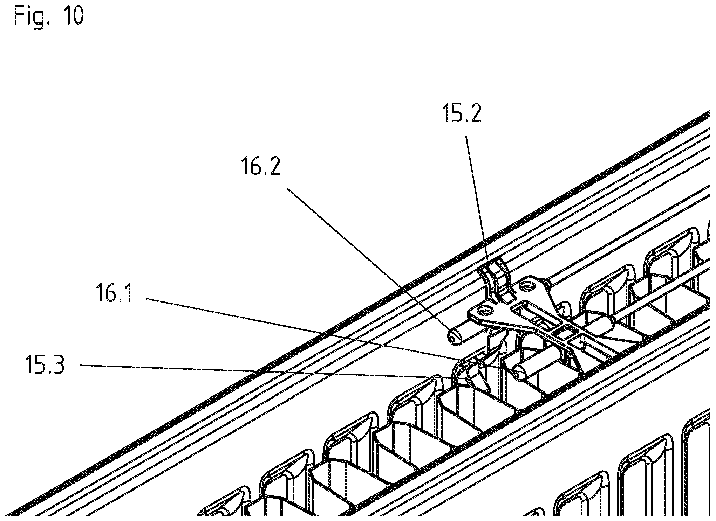

Nach einer weiteren Variante der Erfindung ist vorgesehen, dass die Verbindungsplatte 15.1 der Haltelemente 15 eine Nut 15.5 zur Aufnahme eines Temperaturfühlers 16.1 aufweist. Hierzu wird auf die Fig. 7 bis 10 verwiesen. Unten im Heizkörper ist der gleiche Halter mit einem Temperaturfühler 16.1, 16.2 ausgestattet, einmal anliegend am Wasserkanal, um die Plattentemperatur zu messen und einmal mittig luftumströmt, um die Lufttemperatur zu messen. Vorteilhaft kann dabei weiter vorgesehen werden, dass wenigstens einer der Haltestege 15.2, 15.3 der Haltelemente 15 eine Nut 15.6 zur Aufnahme eines Temperaturfühlers aufweist.

Der Montagevorgang läuft wie folgt ab: Die in den Haltelementen 15 vormontierten Ventilatoren 14.1 werden von oben oder unten zur Bildung einer Lüftergruppe 14 in den Heizkörper 10 eingesteckt. Beim Einstecken in den Heizkörper drücken sich die unteren Haltestege 15.3 zusammen bzw. nach innen, bis diese unter dem waagerechten Wasserkanal 11.1, 12.1 sind. Die oberen Haltestege 15.2 verhindern das weitere Einschieben in den Heizkörper. Die Montage kann auch entgegengesetzt, also am unteren Sammelkanal, mit den gleichen Halteelementen erfolgen.

## Patentansprüche

1. Heiz- oder Kühlkörper, insbesondere mehrreihiger Flachheizkörper (10) oder Heizwand in vertikaler oder horizontaler Anordnung, bestehend aus mindestens zwei Heizplatten (11, 12) mit eingeprägten oberen und unteren horizontalen Sammelkanälen (11.1, 12.1) und vertikalen Heizkanälen (11.2, 12.2) sowie einem Vor -und Rücklaufanschluss zum Anschluss an das Netz eines Heizungssystems, welches den Heiz- oder Kühlkörper mit einem Heiz- oder Kühlmedium versorgt, wobei zwischen den Heizplatten an jedem oberen seitlichen Endabschnitt und/oder an jedem unteren seitlichen Endabschnitt Anschlussgarnituren (13) angeordnet sind, sowie eine mindestens einen Ventilator (14.1) aufweisenden Lüfterbaugruppe (14) die mittels Halteelementen (15) zwischen zwei den Heizplatten (11, 12) des Heiz- oder Kühlkörpers (10) anbringbar ist, **dadurch gekennzeichnet, dass** die Halteelemente (15) eine Verbindungsplatte (15.1) umfassen, die zwischen den zwei Heizplatten (11,12) einsetzbar ist, wobei die Verbindungsplatte (15.1) an den den beiden Heizplatten (11, 12) des Heiz- oder Kühlkörpers (10) zugerichteten Enden der Verbindungsplatte (15.1) nach oben und unten weisende Haltestege (15.2, 15.3) aufweist, die mit den sich gegenüberliegenden beiden Heizplatten (11, 12) in einem Wirkungszusammenhang stehen und in der Verbindungsplatte (15.1) außerdem Mittel zur Fixierung mindestens eines Ventilators der Lüfterbaugruppe vorgesehen sind.

2. Heiz- oder Kühlkörper nach Anspruch 1, **dadurch gekennzeichnet, dass** die Mittel (15.4) zur Fixierung der Ventilatoren (14.1) der Lüfterbaugruppe (14) kraft-, form- oder stoffschlüssig ausgebildet sind.

3. Heiz- oder Kühlkörper nach Anspruch 2, **dadurch gekennzeichnet, dass** die die Ventilatoren (14.1) der Lüfterbaugruppe (14) mit der Verbindungsplatte (15.1) der Halteelemente (15) mittels Schraubverbindungen fixiert werden.

4. Heiz- oder Kühlkörper nach einem der Ansprüche 1 bis 3, **dadurch gekennzeichnet, dass** die Halteelemente (15) klammernd an den eingeprägten oberen und/oder unteren horizontalen Sammelkanälen (11.1, 12.1) der sich gegenüberliegenden Heizplatten eingreifen.

5. Heiz- oder Kühlkörper nach einem der Ansprüche 1 bis **4, dadurch gekennzeichnet, dass** die Haltelemente (15) mit der Lüfterbaugruppe (14) zwischen den oberen oder unteren eingeprägten horizontalen Sammelkanälen (11.1, 12.1) der beiden sich gegenüberliegenden Heizplatten (11, 12) einsetzbar sind.

6. Heiz- oder Kühlkörper nach einem der Ansprüche 1 bis 5, **dadurch gekennzeichnet, dass** die Verbindungsplatte (15.1) der Haltelemente (15) eine Nut (15.5) zur Aufnahme eines Temperaturfühlers (16.1) aufweist.

7. Heiz- oder Kühlkörper nach einem der Ansprüche 1 bis 6, **dadurch gekennzeichnet, dass** wenigstens einer der Haltestege (15.2, 15.3) der Haltelemente (15) eine Nut (15.6) zur Aufnahme eines Temperaturfühlers (16.2) aufweist.

## Claims

1. A heating or cooling body, in particular multi-row flat radiator (10) or heating wall in vertical or horizontal arrangement, consisting of at least two heating panels (11, 12) with embossed upper and lower horizontal collection channels (11.1, 12.1) and vertical heating channels (11.2, 12.2) and a flow and return connector for connection to the pipework of a heating system which supplies a heating or cooling medium to the heating or cooling body, wherein connection fittings (13) are arranged between the heating panels on each upper lateral end portion and/or on each lower lateral end portion, and a fan assembly (14), which has at least one fan (14.1) and which is mountable by means of holding elements (15) between two of the heating panels (11, 12) of the heating or cooling body (10), **characterised in that** the holding elements (15) comprise a connection plate (15.1) which is insertable between the two heating panels (11, 12), wherein the connection plate (15.1), at the ends of the connection plate (15.1) directed towards the two heating panels (11, 12) of the heating or cooling body (10), has upwardly and downwardly pointing holding webs (15.2, 15.3), which operatively interact with the opposite two heating panels (11, 12), and, in addition, means for fixing at least one fan of the fan assembly are provided in the connection plate (15.1).

2. The heating or cooling body according to claim 1, **characterised in that** the means (15.4) for fixing the fans (14.1) of the fan assembly (14) are frictionally engaging, form fitting or integrally bonding.

3. The heating or cooling body according to claim **2, characterised in that** the fans (14.1) of the fan assembly (14) are fixed to the connection plate (15.1) of the holding elements (15) by means of screw connections.

4. The heating or cooling body according to any one of claims 1 to **3, characterised in that** the holding elements (15) engage in a clipped manner with the embossed upper and/or lower horizontal collection channels (11.1, 12.1) of the mutually opposed heating panels.

5. The heating or cooling body according to any one of claims 1 to 4, **characterised in that** the holding elements (15) with the fan assembly (14) are insertable between the upper or lower embossed horizontal collection channels (11.1, 12.1) of the two mutually opposed heating panels (11, 12).

6. The heating or cooling body according to any one of claims 1 to 5, **characterised in that** the connection plate (15.1) of the holding elements (15) has a groove (15.5) for receiving a temperature sensor (16.1).

7. The heating or cooling body according to any one of claims 1 to 6, **characterised in that** at least one of the holding webs (15.2, 15.3) of the holding elements (15) has a groove (15.6) for receiving a temperature sensor (16.2).

## Revendications

1. Corps chauffant ou refroidissant, en particulier radiateur plat à plusieurs rangées (10) ou paroi chauffante dans un agencement vertical ou horizontal, constitué d'au moins deux panneaux chauffants (11, 12) avec des canaux de collecte horizontaux supérieur et inférieur gaufrés (11.1, 12.1) et des canaux de chauffages verticaux (11.2, 12.2) et un raccord de débit et de retour pour raccordement à la tuyauterie d'un réseau de chauffage qui alimente en un fluide de chauffage ou de refroidissement le corps chauffant ou en refroidissant, dans lequel des adaptateurs de raccordement (13) sont agencés entre les panneaux chauffants sur chaque partie d'extrémité latérale supérieure et/ou sur chaque partie d'extrémité latérale inférieure, et un ensemble ventilateur (14), qui a au moins un ventilateur (14.1) et qui peut être monté au moyen d'éléments de maintien (15) entre deux des panneaux chauffants (11, 12) du corps chauffant ou refroidissant (10), **caractérisé en ce que** les éléments de maintien (15) comprennent une plaque de raccordement (15.1) qui peut être insérée entre les deux panneaux chauffants (11, 12), dans lequel la plaque de raccordement (15.1), aux extrémités de la plaque de raccordement (15.1) dirigées vers les deux panneaux chauffants (11, 12) du corps chauffant ou refroidissant (10), a des filets de maintien pointant vers le haut et vers le bas (15.2, 15.3), qui interagissent de manière fonctionnelle avec les deux panneaux chauffants (11, 12) opposés, et, de plus, des moyens de fixation d'au moins un ventilateur de l'ensemble ventilateur sont fournis dans la plaque de raccordement (15.1).

2. Corps chauffant ou refroidissant selon la revendication 1, **caractérisé en ce que** les moyens (15.4) de fixation des ventilateurs (14.1) de l'ensemble ventilateur (14) sont en prise en friction, à forme ajustée ou à liaison intégrale.

3. Corps chauffant ou refroidissant selon la revendication 2, **caractérisé en ce que** les ventilateurs (14.1) de l'ensemble ventilateur (14) sont fixés à la plaque de raccordement (15.1) des éléments de maintien (15) au moyen de raccordements à vis.

4. Corps chauffant ou refroidissant selon l'une quelconque des revendications 1 à 3, **caractérisé en ce que** les éléments de maintien (15) viennent en prise de manière enclenchée avec les canaux de collecte horizontaux supérieur et/ou inférieur gaufrés (11.1, 12.1) des panneaux chauffants mutuellement opposés.

5. Corps chauffant ou refroidissant selon l'une quelconque des revendications 1 à 4, **caractérisé en ce que** les éléments de maintien (15) avec l'ensemble ventilateur (14) peuvent être insérés entre les canaux de collecte horizontaux gaufrés supérieur ou inférieur (11.1, 12.1) des deux panneaux chauffants mutuellement opposés (11, 12).

6. Corps chauffant ou refroidissant selon l'une quelconque des revendications 1 à 5, **caractérisé en ce que** la plaque de raccordement (15.1) des éléments de maintien (15) a une rainure (15.5) pour recevoir un capteur de température (16.1).

7. Corps chauffant ou refroidissant selon l'une quelconque des revendications 1 à 6, **caractérisé en ce qu'**au moins un des filets de maintien (15.2, 15.3) des éléments de maintien (15) a une rainure (15.6) pour recevoir un capteur de température (16.2).
